# EUROPEAN PATENT APPLICATION

(11) **EP 3 771 807 A1**
(43) Date of publication of application: **03.02.2021**
(21) Application number: 20180284.0
(22) Date of filing: 16.06.2020
(51) Int. Cl.: F01N 3/022, F01N 3/28, F01N 3/035, C04B 38/00, C04B 35/48, B01J 23/63

(54) **EXHAUST GAS PURIFICATION SYSTEM AND METHOD FOR PRODUCING EXHAUST GAS PURIFICATION APPARATUS**

(30) Priority: 01.08.2019 JP 2019141904
(71) Applicant: TOYOTA JIDOSHA KABUSHIKI KAISHA, TOYOTA-SHI, AICHI-KEN 471-8571 (JP); CATALER CORPORATION, Kakegawa-shi, Shizuoka-ken, 437-1492 (JP)
(72) Inventor: SUGIURA, Koji, Aichi-ken, 471-8571 (JP); NISHIOKA, Hiromasa, Aichi-ken, 471-8571 (JP); MIYOSHI, Naoto, Aichi-ken, 471-8571 (JP); SATO, Akemi, Aichi-ken, 471-8571 (JP); IKEBE, Masatoshi, Shizuoka-ken, 437-1492 (JP); NAKASHIMA, Ryota, Shizuoka-ken, 437-1492 (JP); NOMURA, Yasutaka, Shizuoka-ken, 437-1492 (JP); ORI, Hirotaka, Shizuoka-ken, 437-1492 (JP)
(74) Representative: J A Kemp LLP

(57) **Abstract**

An exhaust gas control apparatus includes: a honeycomb substrate (10) including an inflow cell and an outflow cell adjacent to each other with a partition wall sandwiched between the inflow cell and the outflow cell; a first sealing part (20) provided at an outflow side end (16Ab) of the inflow cell, and a second sealing part (20) provided at an inflow side end (16Ba) of the outflow cell; and a catalyst layer (30) provided on the partition wall (14), and at least one of the first sealing part and the second sealing part is an OSC material-containing sealing part containing an OSC material and a sealant, and a concentration of the OSC material in the OSC material-containing sealing part is uniform in an extending direction.

## Description

### BACKGROUND OF THE INVENTION

### 1. Field of the Invention

The invention relates to an exhaust gas control apparatus including a catalyst provided in a filter having a wall-flow structure, an exhaust gas control system using the exhaust gas control apparatus, and a method for producing the exhaust gas control apparatus.

### 2. Description of Related Art

An exhaust gas discharged from an internal combustion engine of a car or the like contains a particular matter (hereinafter sometimes abbreviated as "PM") principally containing carbon that can be a cause of air pollution, and ashes and the like corresponding to an incombustible component. As a filter for collecting and removing a PM from an exhaust gas, a filter having the following wall-flow structure is widely used. The wall-flow structure includes a honeycomb substrate having a porous partition wall demarcating a plurality of cells extending from an inflow side end surface to an outflow side end surface, and the plurality of cells include an inflow cell and an outflow cell adjacent to each other with the partition wall sandwiched between the inflow cell and the outflow cell. The inflow cell is opened at an inflow side end and sealed with a sealing part at an outflow side end, and the outflow cell is sealed with a sealing part at an inflow side end and opened at an outflow side end.

In the filter having the wall-flow structure, an exhaust gas flowing into the inflow cell through the inflow side end passes through the partition wall to flow into the outflow cell, and flows out through the outflow side end of the outflow cell. When the exhaust gas passes through the partition wall, a PM is collected in pores of the partition wall. Known examples of the filter having a wall-flow structure include a diesel particulate filter (DPF) for a diesel engine, and a gasoline particulate filter (hereinafter sometimes abbreviated as "GPF") for a gasoline engine.

On the other hand, an exhaust gas contains, in addition to a PM, harmful components such as carbon monoxide (CO), hydrogen carbonate (HC) and nitrogen oxides (NOx). Such harmful components can be removed using a filter provided with a catalyst. Therefore, in recent years, an exhaust gas control apparatus including a catalyst provided in a filter having a wall-flow structure is used as an apparatus capable of not only removing a PM but also removing harmful components.

In such an exhaust gas control apparatus provided with a catalyst, in order to efficiently remove harmful components contained in an exhaust gas, an air-fuel ratio (A/F) between air and a fuel in an air mixture supplied to an internal combustion engine is preferably in the vicinity of a stoichiometric air-fuel ratio (stoichiometric ratio). An actual air-fuel ratio is, however, rich (A/F < 14.7) or lean (A/F > 14.7) about a stoichiometric ratio depending on driving conditions of a car and the like, and hence an exhaust gas is rich or lean correspondingly. Therefore, in order to absorb or reduce air-fuel ratio variation in an exhaust gas to keep the air-fuel ratio in the vicinity of the stoichiometric air-fuel ratio for improving exhaust gas control performance, an OSC material having an oxygen storage capacity (OSC) and capable of absorbing/releasing oxygen is used as the catalyst in some cases. As an exhaust gas control apparatus using an OSC material as the catalyst, an apparatus produced by supplying an OSC material onto a surface of or into a partition wall of a honeycomb substrate or to a sealing part for sealing a cell as described in, for example, Published Japanese Translation of PCT application No. 2017-527437 is known.

### SUMMARY OF THE INVENTION

In an exhaust gas control apparatus using an OSC material as a catalyst, the air-fuel ratio of an exhaust gas on an upstream side is switched from a rich ratio to a lean ratio or from a lean ratio to a rich ratio, an oxygen storage amount (amount of OSC) is detected in switching the ratio, and deterioration of the catalyst is detected based on the thus detected oxygen storage amount. On the contrary, when the exhaust gas control apparatus is installed in a place where the concentration of the exhaust gas is low in an exhaust gas passage, it is difficult to detect the oxygen storage amount in some cases.

The present invention provides an exhaust gas control apparatus, an exhaust gas control system, and a method for producing an exhaust gas control apparatus in which an oxygen storage amount can be easily detected.

One aspect of the present invention relates to an exhaust gas control apparatus including: a honeycomb substrate having a porous partition wall demarcating a plurality of cells extending from an inflow side end surface to an outflow side end surface, the plurality of cells including an inflow cell and an outflow cell adj acent to each other with the partition wall sandwiched between the inflow cell and the outflow cell; a first sealing part provided at an outflow side end of the inflow cell, and a second sealing part provided at an inflow side end of the outflow cell; and a catalyst layer provided on the partition wall. The inflow cell is opened at an inflow side end and sealed with the first sealing part at the outflow side end, and the outflow cell is sealed with the second sealing part at the inflow side end and opened at an outflow side end. At least one of the first sealing part and the second sealing part is an OSC material-containing sealing part containing an OSC material and a sealant, and a concentration of the OSC material in the OSC material-containing sealing part is uniform in an extending direction.

According to the present invention, an oxygen storage amount can be easily detected.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a schematic perspective view illustrating an example of an embodiment of an exhaust gas control apparatus according to the invention;
FIG. 1B is a schematic diagram illustrating a part of a cross-section parallel to an axial direction of the exhaust gas control apparatus of FIG. 1A;
FIG. 2 is a schematic diagram illustrating an example of an embodiment of an exhaust gas control system according to the invention;
FIG. 3 is a flowchart illustrating an example of an embodiment of a method for producing an exhaust gas control apparatus according to the invention;
FIG. 4A is a schematic sectional view illustrating a step of the example of the embodiment of the method for producing an exhaust gas control apparatus according to the invention;
FIG. 4B is a schematic sectional view illustrating another step of the example of the embodiment of the method for producing an exhaust gas control apparatus according to the invention;
FIG. 5A is a schematic sectional view illustrating another step of the example of the embodiment of the method for producing an exhaust gas control apparatus according to the invention;
FIG. 5B is a schematic sectional view illustrating another step of the example of the embodiment of the method for producing an exhaust gas control apparatus according to the invention;
FIG. 6 is a graph illustrating measurement results of oxygen storage amounts of test samples created in Examples 1 and 2 and Comparative Example;
FIG. 7 is a graph illustrating averages of X-ray intensities of Ce measured in three positions of an outer end position, a center position and an inner end position in an extending direction of an OSC material-containing sealing part in each of the test samples of Examples 1 and 2 and Comparative Example; and
FIG. 8 is a graph of H₂-TPR spectra (TCD signals) of OSC materials obtained in Reference Examples 1 and 2.

### DETAILED DESCRIPTION OF EMBODIMENTS

Now, an exhaust gas control apparatus, an exhaust gas control system and a method for producing an exhaust gas control apparatus according to the present invention will be described in detail.

### A. Exhaust Gas Control Apparatus

An embodiment of the exhaust gas control apparatus of the invention will now be described.

The exhaust gas control apparatus of the present embodiment includes a honeycomb substrate having a porous partition wall demarcating a plurality of cells extending from an inflow side end surface to an outflow side end surface, the plurality of cells including an inflow cell and an outflow cell adjacent to each other with the partition wall sandwiched between the inflow cell and the outflow cell; sealing parts provided at an outflow side end of the inflow cell and an inflow side end of the outflow cell, respectively; and a catalyst layer provided on the partition wall. The inflow cell is opened at an inflow side end and sealed with the sealing part at the outflow side end, and the outflow cell is sealed with the sealing part at the inflow side end and opened at an outflow side end. At least one of the sealing part provided at the outflow side end of the inflow cell and the sealing part provided at the inflow side end of the outflow cell is an OSC material-containing sealing part containing an OSC material and a sealant, and a concentration of the OSC material in the OSC material-containing sealing part is uniform in an extending direction. Here, the term "inflow side" refers to a side on which an exhaust gas flows into the exhaust gas control apparatus, and the term "outflow side" refers to a side on which the exhaust gas flows out of the exhaust gas control apparatus. Besides, the term "extending direction" refers to an extending direction of the cells and an extending direction of the sealing parts according with the extending direction of the cells.

In the present embodiment, the extending direction of the cells is not especially limited, and is usually substantially the same as an extending direction of the partition wall. The extending direction of the partition wall is not especially limited, and is usually substantially the same as an axial direction of the honeycomb substrate. In the description of the present embodiment, the term "axial direction" refers to the axial direction of the honeycomb substrate, and the term "extending direction" refers to the extending direction of the cells and the extending direction of the partition wall, and is substantially the same as the axial direction of the honeycomb substrate.

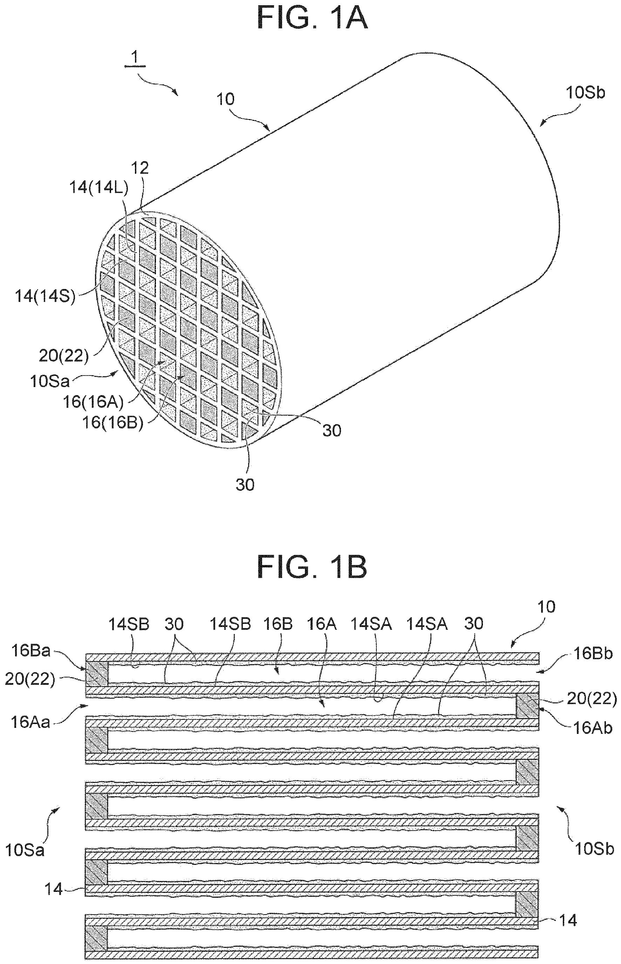

First, the exhaust gas control apparatus of the present embodiment will be exemplarily described. Here, FIG. 1A is a schematic perspective view illustrating an example of the embodiment of the exhaust gas control apparatus of the present invention, and FIG. 1B is a schematic diagram illustrating a part of a cross-section parallel to the axial direction of the exhaust gas control apparatus of FIG. 1A.

The exhaust gas control apparatus 1 of this example includes, as illustrated in FIGS. 1A and 1B, a honeycomb substrate 10, a sealing part 20 and a catalyst layer 30. In the honeycomb substrate 10, a cylindrical frame part 12 and a partition wall 14 partitioning a space inside the frame part 12 into a honeycomb shape are integrally formed. The partition wall 14 is a porous member demarcating a plurality of cells 16 extending from an inflow side end surface 10Sa to an outflow side end surface 10Sb. The partition wall 14 includes a plurality of wall parts 14L spaced from and disposed in parallel to one another and a plurality of wall parts 14S perpendicular to the plurality of wall parts 14L and spaced from and disposed in parallel to one another, so that a cross section vertical to the extending direction of each of the plurality of cells 16 can be in a square shape. Thus, a cross section of the partition wall 14 vertical to the extending direction has a grid shape.

The plurality of cells 16 include an inflow cell 16A and an outflow cell 16B adjacent to each other with the partition wall 14 sandwiched therebetween. The catalyst layer 30 is provided on an inflow cell side surface 14SA and an outflow cell side surface 14SB of the partition wall 14. The inflow cell 16Ais opened at an inflow side end 16Aa in the extending direction and is sealed with the sealing part 20 at an outflow side end 16Ab in the extending direction. The outflow cell 16B is sealed with the sealing part 20 at an inflow side end 16Ba in the extending direction and is opened at an outflow side end 16Bb in the extending direction.

The sealing part 20 provided at the outflow side end 16Ab of the inflow cell 16A and the sealing part 20 provided at the inflow side end 16Ba of the outflow cell 16B are both OSC material-containing sealing parts 22 containing an OSC material. A concentration of the OSC material in the OSC material-containing sealing part 22 is uniform in the extending direction. In H₂ consumption obtained by heating the OSC material at a temperature increasing rate of 10°C/min in a gas mixture atmosphere of 5% by volume of H₂ gas and 95% by volume of N₂ gas, the OSC material has a peak of H₂ consumption in a range of 500°C or more and 650°C or less.

In the exhaust gas control apparatus 1 of this example, the sealing part 20 provided at the outflow side end 16Ab of the inflow cell 16A and the sealing part 20 provided at the inflow side end 16Ba of the outflow cell 16B are both the OSC material-containing sealing parts 22 in which the concentration of the OSC material is uniform in the extending direction. Each of these OSC material-containing sealing parts 22 can be formed by preparing an OSC material-containing slurry by mixing the OSC material, a catalytic metal particle, a sealant and a solvent, filling both the outflow side end 16Ab of the inflow cell 16Aand the inflow side end 16Ba of the outflow cell 16B with the OSC material-containing slurry, and burning the resultant honeycomb substrate 10 filled with the OSC material-containing slurry. Therefore, in the OSC material-containing sealing parts 22, a content of the OSC material can be increased without increasing a porosity differently from a conventional OSC material-containing sealing part formed by penetrating, with a slurry containing an OSC material, a porous member obtained by filling an end portion of each cell with a sealant slurry, and burning the resultant. Accordingly, without impairing strength of the OSC material-containing sealing part 22, detectability of an oxygen storage amount can be improved.

The OSC material contained in the OSC material-containing sealing part 22 has a peak of H₂ consumption, in the H₂ consumption obtained by heating the OSC material at a temperature increasing rate of 10°C/min in a gas mixture atmosphere of 5% by volume of H₂ gas and 95% by volume of N₂ gas, in a low temperature region of 500°C or more and 650°C or less. Therefore, the detectability of the oxygen storage amount particularly in a low temperature region can be increased.

Besides, since the OSC material is contained in the OSC material-containing sealing part 22, there is no need to cause the OSC material to be contained in the catalyst layer 30 provided on the partition wall 14 for imparting the oxygen storage capacity. Therefore, a noble metal particle and the like can be contained in the catalyst layer 30 in a larger amount as much, so that the performance of removing harmful components such as NOx can be improved. Besides, heat is generated through an oxygen releasing reaction occurring in the OSC material contained in the OSC material-containing sealing part 22 in starting an internal combustion engine, and hence, deterioration occurring at the time of warm-up can be reduced.

According to the present embodiment, as in this example, in at least one OSC material-containing sealing part of the sealing part provided at the outflow side end of the inflow cell and the sealing part provided at the inflow side end of the outflow cell, the content of the OSC material can be increased without increasing the porosity. Therefore, the detectability of the oxygen storage amount can be increased without impairing the strength of the OSC material-containing sealing part. As a result, the oxygen storage amount can be easily detected.

Besides, since the OSC material is contained in the OSC material-containing sealing part, there is no need to cause the OSC material to be contained in the catalyst layer provided on the partition wall for imparting the oxygen storage capacity. Therefore, a noble metal particle and the like can be contained in the catalyst layer in a larger amount as much, so that the performance of removing harmful components such as NOx can be improved. Besides, heat is generated through the oxygen releasing reaction occurring in the OSC material contained in the OSC material-containing sealing part in starting the internal combustion engine, and hence, the deterioration occurring at the time of warm-up can be reduced.

Subsequently, each component of the exhaust gas control apparatus of the present embodiment will be described in detail.

### 1. Sealing Part

The sealing part is provided at the outflow side end of the inflow cell and the inflow side end of the outflow cell. At least one of the sealing part provided at the outflow side end of the inflow cell and the sealing part provided at the inflow side end of the outflow cell is the OSC material-containing sealing part containing the OSC material and the sealant.

### (1) OSC Material-containing Sealing Part

The OSC material-containing sealing part is a sealing part containing the OSC material and the sealant, and the concentration of the OSC material in the OSC material-containing sealing part is uniform in the extending direction.

Here, "the concentration of the OSC material in the OSC material-containing sealing part being uniform in the extending direction" means the following: Assuming that an average of concentrations of the OSC material in different positions in the extending direction of the OSC material-containing sealing part is 1, the concentrations of the OSC material in the different positions in the extending direction of the OSC material-containing sealing part fall in a range of 0.5 or more and 1.5 or less. Assuming that the average of the concentrations of the OSC material in the different positions in the extending direction of the OSC material-containing sealing part is 1, the concentrations of the OSC material in the different positions fall particularly preferably in a range of 0.75 or more and 1.25 or less.

It is noted that the "concentration of the OSC material in the OSC material-containing sealing part" refers to a mass concentration of the OSC material in the OSC material-containing sealing part, and is measured, for example, by analyzing constituent elements of the OSC material with an EPMA (electron probe microanalyzer). Each component of the OSC material-containing sealing part will now be described in detail.

### a. OSC Material

The OSC material is an inorganic material having the oxygen storage capacity that absorbs oxygen when an exhaust gas having a lean air-fuel ratio is supplied and releases oxygen when an exhaust gas having a rich air-fuel ratio is supplied.

As in the example illustrated in FIGS. 1A and 1B, the OSC material preferably has a peak of H₂ consumption, in the H₂ consumption obtained by heating the OSC material at a temperature increasing rate of 10°C/min in a gas mixture atmosphere of 5% by volume of H₂ gas and 95% by volume of N₂ gas, in the range of 500°C or more and 650°C or less. Thus, the detectability of the oxygen storage amount particularly in a low temperature region can be increased. In this manner, when the exhaust gas control apparatus is used as, for example, an underfloor catalyst (UF/C), an effect capable of easily detecting the oxygen storage amount can be remarkably exhibited.

Incidentally, in the H₂ consumption obtained by heating the OSC material at a temperature increasing rate of 10°C/min in a gas mixture atmosphere of 5% by volume of H₂ gas and 95% by volume of N₂ gas, the OSC material has a peak of H₂ consumption in the range of 500°C or more and 650°C or less because the OSC material exhibits a high oxygen storage capacity even in a low temperature region owing to a factor of, for example, a regular crystal structure.

An evaluation method of the H₂ consumption is a method known as a temperature-programed reduction method generally using H₂ as a reaction gas (H₂-TPR). A measurement apparatus used in the evaluation method of the H₂ consumption is, for example, a catalyst analyzer BELCAT-A manufactured by Microtracbel Corp.

A material of the OSC material is not especially limited, and can be, for example, ceria or a composite oxide containing ceria. An example of the composite oxide containing ceria includes a ceria-zirconia-based composite oxide.

A form of the OSC material is not especially limited, can be any of general forms, and is preferably a powder form. Thus, a larger specific surface area can be ensured. An average particle size of the OSC material in a powder form is not especially limited, may be a general average particle size, and is preferably in a range of, for example, 0.01 µm or more and 20 µm or less. When the average particle size is equal to or larger than the lower limit of this range, an adequate heat resistant property can be ensured, and when the average particle size is equal to or smaller than the upper limit of the range, an adequate specific surface area can be ensured. Here, the term "form of the OSC material" refers to the form of the OSC material used as a raw material for producing the sealing part, and the term "average particle size of the OSC material in a powder form" refers to an average particle size of the OSC material in a powder form used as the raw material for producing the sealing part, and the average particle size can be obtained by, for example, a laser diffraction scattering method.

### b. Sealant

A material of the sealant is not especially limited, and any of general materials of a sealant can be used. Examples include inorganic materials such as ceramics and metals, and ceramics are preferred. Examples of the ceramics include cordierite, silica, alumina, mullite, silicon carbonate, silicon nitride and aluminum titanate. In particular, cordierite, Sumicerum (manufactured by Sumica Chemtex Co., Ltd.) and the like are preferred as the ceramics. This is because such ceramics have heat resistance stability.

A form of the sealant is not especially limited, can be any of general forms, and is preferably a powder form. An average particle size of the sealant in a powder form is not especially limited, may be a general average particle size, and is preferably in a range of, for example, 0.01 µm or more and 20 µm or less. Here, the term "form of the sealant" refers to the form of the sealant used as a raw material for producing the sealing part, and the term "average particle size of the sealant in a powder form" refers to an average particle size of the sealant in a powder form used as the raw material for producing the sealing part, and the average particle size can be obtained by, for example, a laser diffraction scattering method.

### c. Catalytic Metal Particle

The OSC material-containing sealing part is not especially limited as long as the OSC material and the sealant are contained, and preferably contains a catalytic metal particle in addition to the OSC material and the sealant. Thus, the detectability of the oxygen storage amount can be effectively increased.

A material of the catalytic metal particle is not especially limited, any of general materials can be used, and examples include noble metals such as rhodium (Rh), palladium (Pd) and platinum (Pt). The material of the catalytic metal particle may be a single metal, two or more metals, or an alloy containing two or more metals.

An average particle size of the catalytic metal particle is not especially limited, may be a general average particle size, and is preferably in a range of, for example, 0.1 nm or more and 20 nm or less. When the average particle size is equal to or smaller than the upper limit of this range, a contact area with an exhaust gas can be increased. Here, the term "average particle size of the catalytic metal particle" refers to an average obtained based on particle sizes measured with, for example, a transmission electron microscope (TEM).

### d. OSC Material-containing Sealing Part

The OSC material-containing sealing part may contain an arbitrary component such as a binder or an additive in addition to the OSC material and the sealant, or the OSC material, the sealant and the catalytic metal particle.

A content of the OSC material in the OSC material-containing sealing part is not especially limited, and for example, is preferably in a range of 0.5% by mass or more and 80% by mass or less, and particularly preferably in a range of 10% by mass or more and 50% by mass or less. When the content is equal to or higher than the lower limits of these ranges, the detectability of the oxygen storage amount can be effectively increased. When the content is equal to or lower than the upper limits of these ranges, the strength can be ensured.

A mass ratio of the catalytic metal particle to a total mass of the OSC material and the catalytic metal particle in the OSC material-containing sealing part is not especially limited, and for example, is preferably in a range of 5% by mass or less, and particularly preferably 1% by mass or less. When the mass ratio is equal to or lower than the upper limits of these ranges, the catalytic metal particle can be inhibited from aggregating.

A total content of the sealant and the arbitrary component such as a binder or an additive in the OSC material-containing sealing part may be regarded as a content of balance excluding the OSC material, or excluding the OSC material and the catalytic metal particle. A mass ratio of the sealant to the content of the balance is not especially limited, and may be in a general range.

A length of the OSC material-containing sealing part in the extending direction is not especially limited, may be a length of a general sealing part, and is preferably in a range of, for example, 2 mm or more and 20 mm or less.

### (2) Sealing Part

The sealing part is not especially limited as long as at least one of the sealing part provided at the outflow side end of the inflow cell and the sealing part provided at the inflow side end of the outflow cell is the OSC material-containing sealing part. As in the example illustrated in FIGS. 1A and 1B, the sealing part provided at the inflow side end of the outflow cell is preferably the OSC material-containing sealing part. Thus, the sealing part disposed on a side where the concentration of an exhaust gas is higher is the OSC material-containing sealing part, and hence the effect capable of easily detecting the oxygen storage amount can be remarkably exhibited. The sealing part provided at the outflow side end of the inflow cell may be the OSC material-containing sealing part.

Incidentally, when merely one of the sealing part provided at the outflow side end of the inflow cell and the sealing part provided at the inflow side end of the outflow cell is the OSC material-containing sealing part, the other sealing part does not contain the OSC material. The sealant used in the sealing part not containing the OSC material is the same as that described above in "(1) OSC Material-containing Sealing Part", and hence is not described here.

### 2. Honeycomb Substrate

The honeycomb substrate includes a porous partition wall demarcating a plurality of cells extending from an inflow side end surface to an outflow side end surface. The plurality of cells include an inflow cell and an outflow cell adjacent to each other with the partition wall sandwiched between the inflow cell and the outflow cell, the inflow cell is opened at an inflow side end and an outflow side end, and the outflow cell is opened at an inflow side end and an outflow side end. The inflow cell is to be sealed with a sealing part at the outflow side end, and the outflow cell is to be sealed with a sealing part at the inflow side end.

In the honeycomb substrate, for example, a frame part and the partition wall partitioning a space inside the frame part into a honeycomb shape are integrally formed.

A length in the axial direction of the honeycomb substrate is not especially limited, may be a general length, and is, for example, preferably in a range of 10 mm or more and 500 mm or less, and particularly preferably in a range of 50 mm or more and 300 mm or less. A volume of the honeycomb substrate, namely, a total volume of the cells, is not especially limited, may be a general volume, and is preferably in a range of, for example, 0.1 L or more and 5 L or less.

A material of the honeycomb substrate is not especially limited and may be a general material, and examples include ceramics such as cordierite, silicon carbonate (SiC) and aluminum titanate, and an alloy such as stainless steel.

A shape of the frame part is not especially limited and may be a general shape, and examples include not only a cylindrical shape but also a tubular shape such an elliptic cylindrical shape or a polygonal cylindrical shape. The rest of the structure of the frame part is not especially limited, and may be a general structure.

The shape of the partition wall is not especially limited, and may be a general shape. A length in the extending direction of the partition wall is not especially limited, and usually, is substantially the same as the length in the axial direction of the honeycomb substrate. A thickness of the partition wall is not especially limited, may be a general thickness, and is, for example, preferably in a range of 50 µm or more and 2000 µm or less, and particularly preferably in a range of 100 µm or more and 1000 µm or less. When the thickness of the partition wall falls in such a range, adequate PM collection performance can be obtained, and pressure loss can be adequately restrained, while ensuring the strength of the substrate.

The partition wall has a porous structure permeable to an exhaust gas. A porosity of the partition wall is not especially limited, may be a general porosity, and is, for example, preferably in a range of 40% or more and 70% or less, and particularly preferably in a range of 50% or more and 70% or less. When the porosity is equal to or higher than the lower limits of these ranges, the pressure loss can be effectively restrained. When the porosity is equal to or lower than the upper limits of these ranges, adequate mechanical strength can be ensured. An average pore size of pores of the partition wall is not especially limited, may be a general average pore size, and is, for example, preferably in a range of 1 µm or more and 60 µm or less, and particularly preferably in a range of 5 µm or more and 30 µm or less. When the average pore size of the pores falls in these ranges, adequate PM collection performance can be obtained, and the pressure loss can be adequately restrained. Incidentally, the term "average pore size of the pores of the partition wall" refers to an average pore size measured by, for example, a bubble point method using a perm porometer.

The inflow cell and the outflow cell are formed by partitioning the space inside the frame part by the partition wall, and are adjacent to each other with the partition wall sandwiched therebetween. The inflow cell and the outflow cell are usually surrounded by the partition wall in a direction vertical to the extending direction.

A cross-sectional shape vertical to the extending direction of each of the inflow cell and the outflow cell is not especially limited, may be a general shape, and can be appropriately set in consideration of a flow rate, and components and the like of an exhaust gas passing through the exhaust gas control apparatus. Examples of the cross-sectional shape include a rectangular shape such as a square, a polygonal shape such as a hexagonal shape, and a circular shape. A cross-sectional area vertical to the extending direction of each of the inflow cell and the outflow cell is not especially limited, may be a general cross-sectional area, and is, for example, in a range of 1 mm² or more and 7 mm² or less. A length in the extending direction of the inflow cell and the outflow cell is not especially limited, and usually, is substantially the same as the length in the axial direction of the honeycomb substrate. The inflow cell and the outflow cell are arranged in, for example, an arrangement like a checkered pattern in which the inflow cell and the outflow cell are alternately arranged.

### 3. Catalyst Layer

The catalyst layer is provided on the partition wall of the honeycomb substrate. The catalyst layer includes, for example, at least one of an inflow cell side catalyst layer provided on or inside an inflow cell side surface of the partition wall, and an outflow cell side catalyst layer provided on or inside an outflow cell side surface of the partition wall. Here, a catalyst layer provided on a cell side surface of the partition wall refers to a catalyst layer provided in contact with the cell side surface of the partition wall outside the partition wall, and a catalyst layer provided inside a cell side surface of the partition wall refers to a catalyst layer provided in a region facing the cell inside the partition wall.

A thickness of the catalyst layer is not especially limited, and may be a general thickness. The catalyst layer usually contains a catalytic metal particle and a support supporting the catalytic metal particle, and is, for example, a porous sintered compact of a catalyst-supporting support in which a catalytic metal particle is supported.

A material of the catalytic metal particle is not especially limited and can be a general material, and examples include noble metals such as rhodium (Rh), palladium (Pd) and platinum (Pt). The material of the catalytic metal particle may be a single metal, two or more metals, or an alloy containing two or more metals. An average particle size of the catalytic metal particle is not especially limited, and can be a general average particle size.

A material of the support is not especially limited and can be a general material, and examples include metal oxides such as alumina (Al₂O₃), zirconia (ZrO₂) and ceria (CeO₂). The material of the support may be a single material, or two or more materials. The form of the support is not especially limited, can be a general form, and is preferably a powder form. Thus, a large specific surface area can be ensured. An average particle size of the support in a powder form is not especially limited, and can be a general average particle size.

A content of the catalytic metal particle is not especially limited, can be a general content, and is varied depending on the material of the catalytic metal particle. When the material is, for example, Pd, Pt or Rh, the content of the catalytic metal particle is preferably in a range of 0.05 g or more and 5 g or less per L of the honeycomb substrate. Here, the content of the catalytic metal particle per L of the volume of the substrate refers to a value obtained by dividing a mass of the catalytic metal particle contained in the catalyst layer by a partial volume in the axial direction of the honeycomb substrate having the same length in the axial direction as the length in the extending direction of the catalyst layer. A mass ratio of the catalytic metal particle to a total mass of the catalytic metal particle and the support is not especially limited, can be a general mass ratio, and is preferably in a range of, for example, 0.01% by mass or more and 10% by mass or less.

The catalyst layer may contain an OSC material in addition to the catalytic metal particle and the support, but preferably does not contain an OSC material as much as the OSC material-containing sealing part contains the OSC material. Besides, the catalyst layer may appropriately contain an arbitrary component such as a binder or an additive.

### 4. Exhaust Gas Control Apparatus

The exhaust gas control apparatus is, for example, produced by employing a production method described below in "C. Method for Producing Exhaust Gas Control Apparatus". In particular, the exhaust gas control apparatus is produced by the production method preferably including a burning step of burning a honeycomb substrate filled with an OSC material-containing slurry at a temperature in a range of 500°C or more and 800°C or less for 0.5 hours or more and 2 hours or less.

### B. Exhaust Gas Control System

An embodiment of the exhaust gas control system according to the present invention will now be described.

The exhaust gas control system of the present embodiment includes an upstream control apparatus and a downstream control apparatus disposed on an upstream side and a downstream side, respectively, in an exhaust gas passage. The upstream control apparatus is a three-way catalyst apparatus, and the downstream control apparatus is the exhaust gas control apparatus described above in "A. Exhaust Gas Control Apparatus".

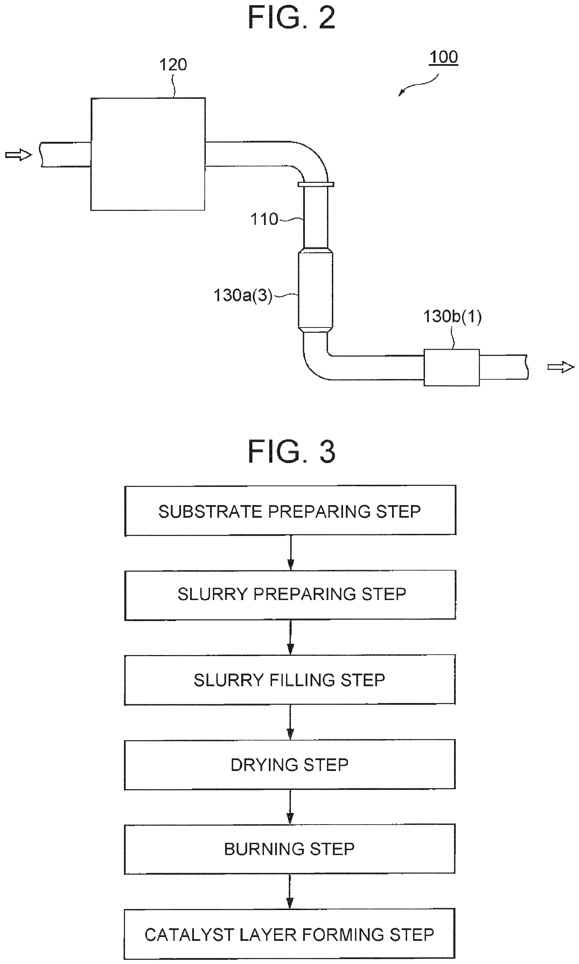

First, the exhaust gas control system of the present embodiment will be exemplarily described. Here, FIG. 2 is a schematic diagram illustrating an example of the embodiment of the exhaust gas control system of the invention.

An exhaust gas control system 100 of this example includes, in an exhaust pipe 110 (exhaust gas passage), a start-up catalyst (S/C, being also called an upstream control apparatus) 130a disposed directly below (on an upstream side of) an engine 120 and an underfloor catalyst (UF/C, corresponding to the downstream control apparatus) 130b disposed downstream from the start-up catalyst 130a. The start-up catalyst 130a is a three-way catalyst apparatus 3, and the underfloor catalyst 130b is the exhaust gas control apparatus 1 illustrated in FIGS. 1A and 1B described above.

In the exhaust gas control system 100 of this example, the exhaust gas control apparatus 1 is disposed in the exhaust pipe 110 as the underfloor catalyst 130b on the downstream side of the start-up catalyst 130a used as the three-way catalyst apparatus 3. On the downstream side of the start-up catalyst 130a in the exhaust pipe 110, the concentration and the temperature of an exhaust gas are lower as compared with those on the upstream side directly below the engine 120. On the other hand, the exhaust gas control apparatus 1 exhibits the effect of increasing the detectability of the oxygen storage amount as described above in "A. Exhaust Gas Control Apparatus". Therefore, although the exhaust gas control apparatus 1 is used as the underfloor catalyst (UF/C) in the exhaust gas control system 100, the oxygen storage amount of the exhaust gas control apparatus 1 can be easily detected.

According to the present embodiment, although the exhaust gas control apparatus is disposed on the downstream side in the exhaust gas passage as in this example, the oxygen storage amount of the exhaust gas control apparatus can be easily detected. Besides, since the exhaust gas control apparatus is disposed on the downstream side having a low temperature in the exhaust gas passage, the exhaust gas control apparatus can be produced by burning a honeycomb substrate filled with an OSC material-containing slurry at a low temperature in a range of, for example, 500°C or more and 800°C or less in, for example, the production method described below in "C. Method for Producing Exhaust Gas Control Apparatus".

Subsequently, each component of the exhaust gas control system of the present embodiment will be described in detail.

The upstream control apparatus is a three-way catalyst apparatus disposed on the upstream side in the exhaust gas passage. The upstream side in the exhaust gas passage refers to the upstream side from the downstream control apparatus, and is a portion immediately below an internal combustion engine such as an engine. The three-way catalyst apparatus is not especially limited, and an example includes a general three-way catalyst apparatus or the like used in an exhaust gas passage of a car or the like.

The downstream control apparatus is the exhaust gas control apparatus disposed on the downstream side in the exhaust gas passage, and is the exhaust gas control apparatus described above in "A. Exhaust Gas Control Apparatus". The downstream side in the exhaust gas passage refers to the downstream side from the upstream control apparatus. The downstream control apparatus is, for example, an underfloor catalyst (UF/C). The exhaust gas control apparatus is the same as that described above in "A. Exhaust Gas Control Apparatus" and hence is not described here.

In the exhaust gas control system, the exhaust gas control apparatus is preferably disposed with the OSC material-containing sealing part positioned on the upstream side as in the example illustrated in FIG. 2. Thus, the effect capable of easily detecting the oxygen storage amount can be remarkably exhibited.

### C. Method for Producing Exhaust Gas Control Apparatus

Now, an embodiment of the method for producing an exhaust gas control apparatus of the invention will be described.

The method for producing an exhaust gas control apparatus according to the present embodiment is a method for producing an exhaust gas control apparatus including: a honeycomb substrate having a porous partition wall demarcating a plurality of cells extending from an inflow side end surface to an outflow side end surface, the plurality of cells including an inflow cell and an outflow cell adjacent to each other with the partition wall sandwiched between the inflow cell and the outflow cell; sealing parts provided at an outflow side end of the inflow cell and an inflow side end of the outflow cell, respectively; and a catalyst layer provided on the partition wall, in which the inflow cell is opened at an inflow side end and sealed with a first sealing part at the outflow side end, and the outflow cell is sealed with a second sealing part at the inflow side end and opened at an outflow side end. The method includes a slurry preparing step of preparing an OSC material-containing slurry by mixing an OSC material, a sealant and a solvent; a slurry filling step of filling at least one of the outflow side end of the inflow cell and the inflow side end of the outflow cell of the honeycomb substrate with the OSC material-containing slurry; and a burning step of burning the honeycomb substrate filled with the OSC material-containing slurry to form, as the sealing part, an OSC material-containing sealing part containing the OSC material in at least one of the outflow side end of the inflow cell and the inflow side end of the outflow cell.

Here, the terms "inflow side", "outflow side" and "extending direction" are defined in the same manner as described above in "A. Exhaust Gas Control Apparatus". In the present embodiment, an extending direction of the cells and an extending direction of the partition wall are the same as those described above in "A. Exhaust Gas Control Apparatus". In the description of the present embodiment, the terms "axial direction" and "extending direction" refer to the same contents as those described in the embodiment above in "A. Exhaust Gas Control Apparatus".

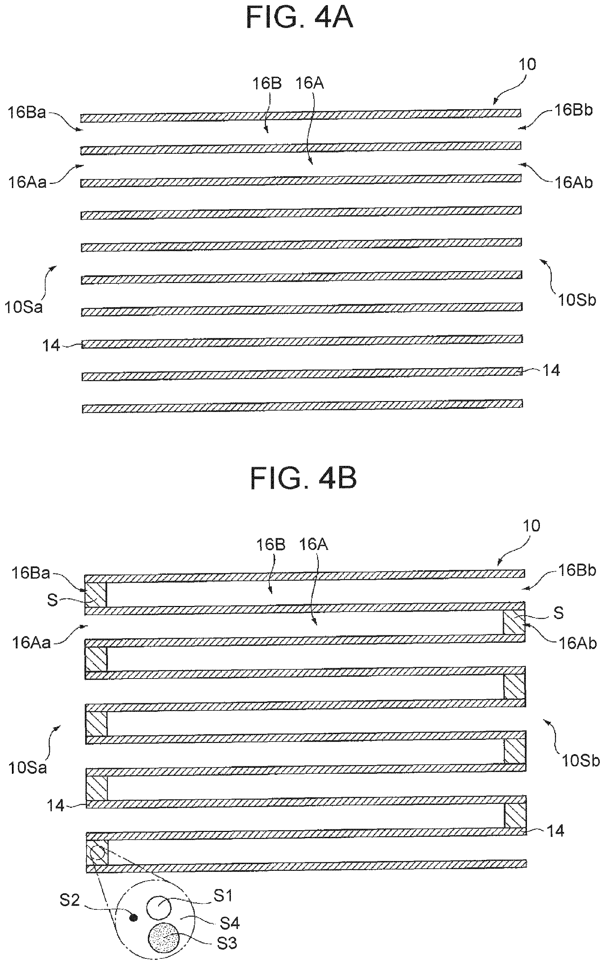

First, the method for producing an exhaust gas control apparatus of the embodiment will be exemplarily described. Here, FIG. 3 is a flowchart illustrating an example of the embodiment of the method for producing an exhaust gas control apparatus of the present invention. FIGS. 4A to 5B are schematic sectional views illustrating steps of the example of the embodiment of the method for producing an exhaust gas control apparatus of the invention.

In the method for producing an exhaust gas control apparatus of this example, a honeycomb substrate 10 is first prepared as illustrated in FIG. 4A (substrate preparing step). The honeycomb substrate 10 is the honeycomb substrate 10 illustrated in FIGS. 1A and 1B described above. In the honeycomb substrate 10, an inflow cell 16A is opened at an inflow side end 16Aa and an outflow side end 16Ab, and an outflow cell 16B is opened at an inflow side end 16Ba and an outflow side end 16Bb.

Next, an OSC material S1 having a peak of H₂ consumption in a range of 500°C or more and 650°C or less in H₂ consumption obtained by heating the OSC material S1at a temperature increasing rate of 10°C/min in a gas mixture atmosphere of 5% by volume of H₂ gas and 95% by volume of N₂ gas, a catalytic metal particle S2, a sealant S3 and a solvent S4 are mixed to prepare an OSC material-containing slurry S (slurry preparing step).

Thereafter, as illustrated in FIG. 4B, both the outflow side end 16Ab of the inflow cell 16A and the inflow side end 16Ba of the outflow cell 16B of the honeycomb substrate 10 are filled with the OSC material-containing slurry S (slurry filling step).

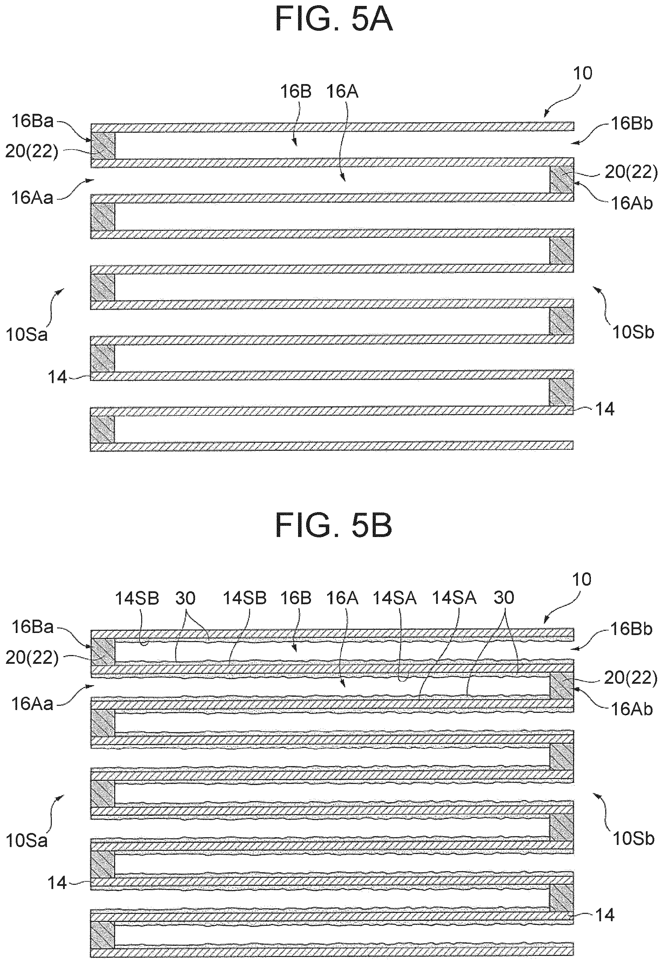

Next, as illustrated in FIG. 5A, the honeycomb substrate 10 filled with the OSC material-containing slurry S is dried, and then burned at a temperature in a range of 500°C or more and 800°C or less for 0.5 hours or more and 2 hours or less (drying step and burning step). In this manner, an OSC material-containing sealing part 22 containing the OSC material is formed as the sealing part 20 in both the outflow side end 16Ab of the inflow cell 16A and the inflow side end 16Ba of the outflow cell 16B.

Then, as illustrated in FIG. 5B, a catalyst layer 30 is formed on an inflow cell side surface 14SA and an outflow cell side surface 14SB of a partition wall 14 (catalyst layer forming step). In this manner, the exhaust gas control apparatus 1 is produced. The exhaust gas control apparatus 1 thus produced is the same apparatus as the exhaust gas control apparatus 1 illustrated in FIGS. 1A and 1B described above.

In the method for producing an exhaust gas control apparatus of this example, both the outflow side end 16Ab of the inflow cell 16A and the inflow side end 16Ba of the outflow cell 16B are filled with the OSC material-containing slurry S obtained by mixing the OSC material S1, the catalytic metal particle S2, the sealant S3 and the solvent S4, and the honeycomb substrate 10 filled with the OSC material-containing slurry S is burned to form the OSC material-containing sealing parts 22 as the sealing parts 20. Therefore, differently from a conventional OSC material-containing sealing part formed by penetrating, with a slurry containing an OSC material, a porous member obtained by filling an end portion of each cell with a sealant slurry and burning the resultant, the content of the OSC material can be increased without increasing the porosity in the OSC material-containing sealing part 22. As a result, the exhaust gas control apparatus 1 increased in the detectability of the oxygen storage amount without impairing the strength of the OSC material-containing sealing part 22 can be produced.

The OSC material mixed in the OSC material-containing slurry S has a peak of H₂ consumption, in the H₂ consumption obtained by heating the OSC material at a temperature increasing rate of 10°C/min in a gas mixture atmosphere of 5% by volume of H2 gas and 95% by volume of N₂ gas, in a low temperature range of 500°C or more and 650°C or less. Besides, the honeycomb substrate 10 filled with the OSC material-containing slurry S is burned at a low temperature of 500°C or more and 800°C or less to form the OSC material-containing sealing part 22. Thus, the oxygen storage capacity of the OSC material can be inhibited from deteriorating because of the reason that, for example, the OSC material is exposed to a high temperature to be deteriorated in the crystal structure or reduced in the specific surface area. Accordingly, the exhaust gas control apparatus 1 increased in the detectability of the oxygen storage amount particularly in a low temperature region can be produced.

According to the present embodiment, the OSC material-containing sealing part increased in the content of the OSC material without increasing the porosity can be formed as at least one of the sealing part provided at the outflow side end of the inflow cell and the sealing part provided at the inflow side end of the outflow cell as in this example. As a result, an exhaust gas control apparatus increased in the detectability of the oxygen storage amount without impairing the strength of the OSC material-containing sealing part can be produced. Accordingly, an exhaust gas control apparatus capable of easily detecting the oxygen storage amount can be produced.

Subsequently, the method for producing an exhaust gas control apparatus according to the present embodiment will be described in detail principally regarding conditions to be employed therein.

### 1. Slurry Preparing Step

In the slurry preparing step, the OSC material, the sealant and the solvent are mixed to prepare the OSC material-containing slurry.

The OSC material preferably has a peak of H₂ consumption, in the H₂ consumption obtained by heating the OSC material at a temperature increasing rate of 10°C/min in a gas mixture atmosphere of 5% by volume of H₂ gas and 95% by volume of N₂ gas, in the range of 500°C or more and 650°C or less as in the example illustrated in FIGS. 4A, 4B, 5A and 5B. Thus, the OSC material-containing sealing part containing the OSC material having a peak of H₂ consumption, in the H₂ consumption, in the low temperature range of 500°C or more and 650°C or less can be formed, and therefore, an exhaust gas control apparatus increased in the detectability of the oxygen storage amount particularly in the low temperature region can be produced. As a result, when used as, for example, an underfloor catalyst (UF/C), the exhaust gas control apparatus thus produced can remarkably exhibit the effect capable of easily detecting the oxygen storage amount. The OSC material is the same as that described above in "A. Exhaust Gas Control Apparatus, 1. Sealing Part, (1) OSC Material-containing Sealing Part", and hence is not described here.

The sealant is the same as that described above in "A. Exhaust Gas Control Apparatus, 1. Sealing Part, (1) OSC Material-containing Sealing Part", and hence is not described here.

The solvent is not especially limited, a general solvent can be used, and examples include water such as ion-exchanged water, alcohol, and a mixture of water and an alcohol.

In the preparation of the OSC material-containing slurry, the OSC material-containing slurry is prepared preferably by mixing a catalytic metal particle in addition to the OSC material, the sealant and the solvent. When the OSC material-containing sealing part containing the catalytic metal particle is thus formed, an exhaust gas control apparatus effectively increased in the detectability of the oxygen storage amount can be produced. The catalytic metal particle is the same as that described above in "A. Exhaust Gas Control Apparatus, 1. Sealing Part, (1) OSC Material-containing Sealing Part", and hence is not described here. Besides, the OSC material-containing slurry may be prepared by mixing an arbitrary component such as a binder and an additive in addition to the OSC material, the sealant and the solvent, or the OSC material, the sealant, the catalytic metal particle and the solvent.

A content of the solvent in the OSC material-containing slurry is not especially limited as long as a desired consistency of the OSC material-containing slurry can be obtained, and is, for example, preferably in a range of 5% by mass or more and 40% by mass or less, and particularly preferably in a range of 10% by mass or more and 35% by mass or less.

A content of the OSC material in a solid component of the OSC material-containing slurry is the same as the content of the OSC material in the OSC material-containing sealing part described above in "A. Exhaust Gas Control Apparatus, 1. Sealing Part, (1) OSC Material-containing Sealing Part", and hence is not described here. A mass ratio of the catalytic metal particle to a total mass of the OSC material and the catalytic metal particle in the solid content of the OSC material-containing slurry is the same as the mass ratio of the catalytic metal particle to the total mass of the OSC material and the catalytic metal particle in the OSC material-containing sealing part described above in the section, and hence is not described here. A total content of the sealant and the arbitrary component such as a binder and an additive in the solid content of the OSC material-containing slurry may be regarded as a content of balance excluding the OSC material or excluding the OSC material and the catalytic metal particle. A mass ratio of the sealant to the content of the balance in the solid content of the OSC material-containing slurry is the same as the mass ratio of the sealant to the content of the balance excluding the OSC material or excluding the OSC material and the catalytic metal particle in the OSC material-containing sealing part described above in the section, and hence is not described here.

A mixing method employed in the preparation of the OSC material-containing slurry is not especially limited as long as a desired OSC material-containing slurry can be prepared, and a general method can be employed.

### 2. Slurry Filling Step

In the slurry filling step, at least one of the outflow side end of the inflow cell and the inflow side end of the outflow cell of the honeycomb substrate is filled with the OSC material-containing slurry.

The honeycomb substrate is the same as that described above in "A. Exhaust Gas Control Apparatus, 2. Honeycomb Substrate", and hence is not described here.

A method for filling at least one of the outflow side end of the inflow cell and the inflow side end of the outflow cell with the OSC material-containing slurry is not especially limited, and a general method can be employed. A length of the outflow side end of the inflow cell or the inflow side end of the outflow cell to be filled with the OSC material-containing slurry is not especially limited and may be a general length, and is, for example, preferably a length with which the OSC material-containing sealing part to be formed has a length falling in a preferable range.

### 3. Burning Step

In the burning step, the honeycomb substrate filled with the OSC material-containing slurry is burned to form, as the sealing part, the OSC material-containing sealing part containing the OSC material in at least one of the outflow side end of the inflow cell and the inflow side end of the outflow cell.

Burning conditions to be employed in the burning step are not especially limited as long as a desired OSC material-containing sealing part can be formed. For example, as in the example illustrated in FIGS. 4A to 5B, conditions for burning the honeycomb substrate filled with the OSC material-containing slurry at a temperature in the range of 500°C or more and 800°C or less for 0.5 hours or more and 2 hours or less are preferred, and conditions for burning at a temperature in a range of 500°C or more and 600°C or less for 0.5 hours or more and 1 hour or less are particularly preferred. When the burning temperature or the burning time is equal to or more than the lower limit of such a range, an organic component can be adequately removed by burning. Besides, when the burning temperature or the burning time is equal to or less than the upper limit of such a range, the oxygen storage capacity of the OSC material can be inhibited from deteriorating because of the reason that, for example, the OSC material is exposed to a high temperature to be deteriorated in the crystal structure or reduced in the specific surface area.

A method for burning the honeycomb substrate filled with the OSC material-containing slurry is not especially limited as long as the OSC material-containing sealing part can be formed, a general method can be employed, and for example, the honeycomb substrate is burned in a burning furnace.

An atmosphere for burning the honeycomb substrate filled with the OSC material-containing slurry is not especially limited and may be a general atmosphere, and an example includes the air atmosphere.

The method for producing an exhaust gas control apparatus preferably includes, after the slurry filling step and before the burning step, a drying step of drying the honeycomb substrate filled with the OSC material-containing slurry, so that the dried honeycomb substrate filled with the OSC material-containing slurry can be burned in the burning step. Drying conditions to be employed in the drying step are not especially limited as long as the solvent can be adequately removed for forming a desired OSC material-containing sealing part, and for example, the honeycomb substrate is dried at a temperature in a range of 60°C or more and 300°C or less for 0.5 hours or more and 5 hours or less.

### 4. Catalyst Layer Forming Step

The method for producing an exhaust gas control apparatus usually includes the catalyst layer forming step of forming a catalyst layer on the partition wall. The catalyst layer forming step is performed usually after the burning step, and includes, for example, at least one of a step of forming an inflow cell side catalyst layer on or inside an inflow cell side surface of the partition wall and a step of forming an outflow cell side catalyst layer on or inside an outflow cell side surface of the partition wall.

A method for forming the catalyst layer is not especially limited and a general method can be employed, and for example, the slurry is supplied on or inside a cell side surface of the partition wall, and then the honeycomb substrate having been supplied with the slurry is dried and burned.

The slurry usually contains a catalytic metal particle, and a support supporting the catalytic metal particle. A method for causing the catalytic metal particle to be supported on the support is not especially limited and a general method can be employed. For example, the support is impregnated with an aqueous solution containing a catalytic metal salt (such as nitrate) or a catalytic metal complex (such as tetraammine complex), and the resultant support is dried and burned. The slurry may contain an OSC material in addition to the catalytic metal particle and the support, but preferably does not contain an OSC material as much as the OSC material-containing sealing part contains the OSC material. The slurry may appropriately contain an arbitrary component such as a binder and an additive. The catalytic metal particle, the support, the OSC material and the arbitrary component are the same as those described above in "A. Exhaust Gas Control Apparatus, 3. Catalyst Layer", and hence are not described here.

A method for supplying the slurry on or inside the cell side surface of the partition wall is not especially limited and a general method can be employed, and for example, the honeycomb substrate is immersed in the slurry from the inflow side end surface or the outflow side end surface, and is taken out of the slurry after a prescribed period of time. In this method, the average particle size of the support contained in the slurry, and properties of the slurry such as a solid content concentration and a viscosity can be appropriately adjusted so that the slurry cannot permeate or can permeate into the partition wall. Alternatively, a pressure difference may be caused between the outflow cell and the inflow cell so that the slurry cannot permeate into the partition wall.

Drying conditions for drying the honeycomb substrate supplied with the slurry are not especially limited, and are varied depending on the shape and the size of the honeycomb substrate or the support. For example, the honeycomb substrate is dried preferably at a temperature in a range of 80°C or more and 300°C or less for 1 hour or more and 10 hours or less. Conditions for burning the honeycomb substrate after the drying are not especially limited, and for example, the honeycomb substrate is burned preferably at a temperature in a range of 400°C or more and 1000°C or less for 1 hour or more and 4 hours or less. It is noted that the thickness and properties such as a porosity of the catalyst layer can be adjusted depending on the properties of the slurry, the supply amount of the slurry, the drying conditions, the burning conditions and the like.

### 5. Method for Producing Exhaust Gas Control Apparatus

In the method for producing an exhaust gas control apparatus, it is preferred that the inflow side end of the outflow cell is filled with the OSC material-containing slurry in the slurry filling step, and that the OSC material-containing sealing part is formed as the sealing part in the inflow side end of the outflow cell in the burning step. Thus, the sealing part disposed on a side where the concentration of an exhaust gas is higher is the OSC material-containing sealing part, and hence, the effect capable of easily detecting oxygen storage amount can be remarkably exhibited.

In the method for producing an exhaust gas control apparatus, when merely one of the outflow side end of the inflow cell and the inflow side end of the outflow cell is filled with the OSC material-containing slurry in the slurry filling step, and the OSC material-containing sealing part is formed in merely one of the outflow side end of the inflow cell and the inflow side end of the outflow cell in the burning step, the other of the outflow side end of the inflow cell and the inflow side end of the outflow cell where the OSC material-containing sealing part is not to be formed is filled with a slurry not containing the OSC material in the slurry filling step, and a sealing part not containing the OSC material is formed in this side end where the OSC material-containing sealing part is not formed in the burning step. A slurry not containing the OSC material is prepared by mixing a sealant and a solvent, and the sealant and the solvent used in this slurry, and the content of the solvent in the slurry not containing the OSC material are the same as those described above in "1. Slurry Preparing Step", and hence are not described here.

Now, the present embodiment will be more specifically described with reference to examples, comparative examples and reference examples.

### 1. Oxygen Storage Amount obtained by OSC Material-containing Sealing Part

An oxygen storage amount (amount of OSC) obtained by an OSC material-containing sealing part formed by burning a honeycomb substrate filled with an OSC material-containing slurry was evaluated.

### Example 1

First, a slurry was prepared by mixing 1.5 g of an OSC material (ceria ratio: 60% by mass) in the form of a powder containing 1% by mass of Pt supported therein, 3.0 g of a sealant in the form of a powder (Sumicerum manufactured by Sumica Chemtex Co., Ltd.), and 0.8 g of ion-exchanged water.

Next, both an outflow side end of an inflow cell and an inflow side end of an outflow cell of a honeycomb substrate (made of cordierite, size: outer diameter of 30 mm x axial length of 50 mm, cell density: 300/inch²) in which a cylindrical frame part and a partition wall (thickness: 200 µm) partitioning a space inside the frame part into a honeycomb shape were integrally formed were filled with the slurry.

Then, the honeycomb substrate filled with the slurry was dried at 120°C for 2 hours, and then burned at 600°C for 1 hour, and thus, an OSC material-containing sealing part having a length in the extending direction of 5 mm was formed on both the outflow side end of the inflow cell and the inflow side end of the outflow cell. Thus, a test sample was created.

### Example 2

A test sample was created in the same manner as in Example 1 except that a slurry was prepared by mixing 0.5 g of the OSC material in the form of a powder containing 1% by mass of Pt supported therein, 4.0 g of the sealant in the form of a powder and 0.4 g of ion-exchanged water.

### Comparative Example

A test sample was created in the same manner as in Example 1 except that a slurry was prepared by mixing the sealant in the form of a powder and ion-exchanged water alone.

### Evaluation

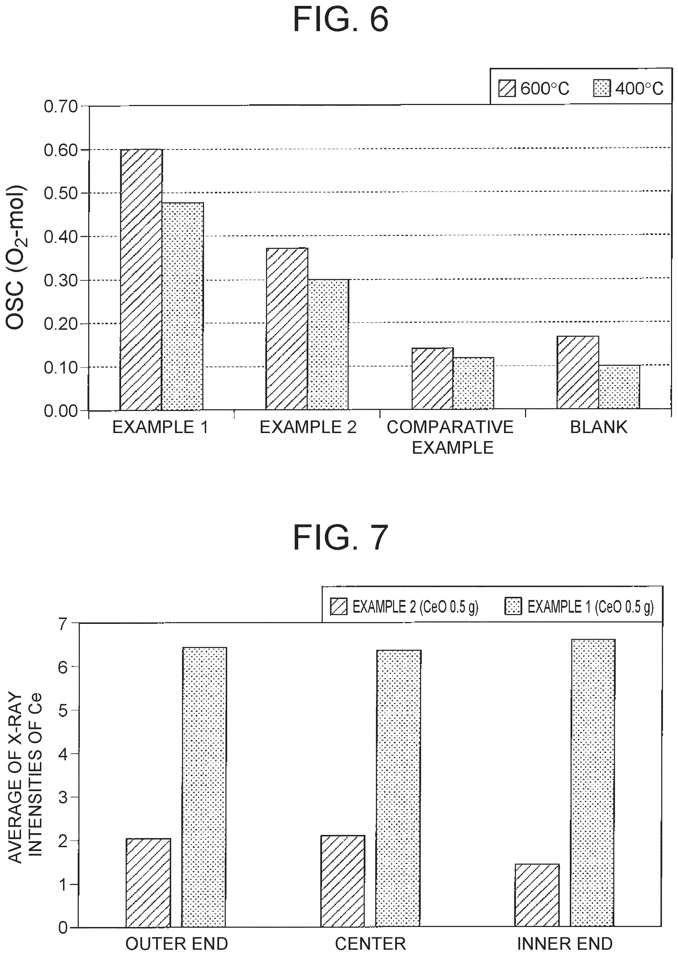

The test samples created in Examples 1 and 2 and Comparative Example were measured for the oxygen storage amount. Specifically, each test sample was set in a model gas generator, and a gas mixture at 600°C containing 1% by volume of O₂ and 99% by volume of N₂ was allowed to flow at a flow rate of 20 L/min for 2 minutes to supply oxygen in an amount adequately saturating the OSC material. Thereafter, a gas mixture at 600°C containing 2% by volume of CO and 98% by volume of N₂ was allowed to flow at a flow rate of 20 L/min. In this manner, based on an amount of CO₂ thus generated from CO, an oxygen storage amount was calculated. Such a procedure was repeated three times, and an average of oxygen storage amounts calculated at these times was obtained as the oxygen storage amount at 600°C of the test sample. Besides, a similar procedure was repeated three times with the temperature of the gas mixture changed to 400°C, and an average of oxygen storage amounts calculated at these times was obtained as the oxygen storage amount at 400°C of the test sample. The results thus measured are shown in Table 1 together with a measured value obtained in a blank sample where the measurement was performed under similar conditions without placing a test sample in the exhaust pipe. Besides, FIG. 6 is a graph illustrating the results of the measurement of the oxygen storage amounts of the test samples created in Examples 1 and 2 and Comparative Example.

**[Table 1]**

| | Oxygen Storage Amount [mmol] at 600°C | Oxygen Storage Amount [mmol] at 400°C |
|---|---|---|
| Example 1 | 0.60 | 0.48 |
| Example 2 | 0.37 | 0.30 |
| Comparative Example | 0.14 | 0.12 |
| Blank | 0.17 | 0.10 |

As shown in Table 1 and FIG. 6, the test samples of Examples 1 and 2 have large oxygen storage amounts at either of the temperatures of 400°C and 600°C than the test sample of Comparative Example. It is presumed that an oxygen storage capacity is attained in an exhaust gas control apparatus even when an OSC material is contained in a sealing part where an exhaust gas does not flow. Besides, the test sample of Example 1 has a larger oxygen storage amount at either of the temperatures of 400°C and 600°C than the test sample of Example 2. It is presumed that the oxygen storage amount was increased because the content of the OSC material in the OSC material-containing sealing part was larger.

### 2. OSC Material Concentration in Different Positions in Extending Direction in OSC Material-containing Sealing Part

Concentrations of an OSC material in different positions in the extending direction in an OSC material-containing sealing part formed by burning a honeycomb substrate filled with an OSC material-containing slurry were evaluated.

### Evaluation

In each of the test samples created in Examples 1 and 2, concentrations of the OSC material in three positions of an outer end position, a center position and an inner end position in the extending direction in the OSC material-containing sealing part were evaluated. Specifically, the OSC material-containing sealing part was cut vertically to the extending direction in the three positions of the outer end position, the center position and the inner end position in the extending direction, and each cross-section was subjected to measurement using EPMA (electron probe microanalyzer) to obtain an average of X-ray intensities of Ce (cerium). FIG. 7 is a graph illustrating averages of the X-ray intensities of Ce in the three positions of the outer end position, the center position and the inner end position in the extending direction in the OSC material-containing sealing part of each of the test samples created in Examples 1 and 2.

As illustrated in FIG. 7, in both the OSC material-containing sealing parts of Examples 1 and 2, the averages of the X-ray intensities of Ce on the cross-sections were substantially the same among the three positions of the outer end position, the center position and the inner end position in the extending direction. Therefore, it is presumed that the concentration of the OSC material (ceria powder) is uniform in the OSC material-containing sealing parts of both Examples 1 and 2.

### 3. Oxygen Storage Amount before and after Endurance Test of OSC Material

Oxygen storage amounts before and after an endurance test of the OSC material of the present embodiment were evaluated.

### Reference Example 1

An OSC material containing a composite oxide of Ce-Zr-additive manufactured by Daiichi Kigenso Kagaku Kogyo Co., Ltd. was obtained.

### Reference Example 2

The OSC material of Reference Example 1 was subjected to an endurance test for heating the OSC material at 1400°C for 5 hours in the air. Thus, an OSC material after the endurance test was obtained.

### Evaluation

The oxygen storage amounts of the OSC materials obtained in Reference Examples 1 and 2 were evaluated by a temperature-programed reduction method using H₂ as a reaction gas (H₂-TPR). For the H₂-TPR, a catalyst analyzer BELCAT-A manufactured by Microtracbel Corp was used.

In the H₂-TPR, a pretreatment was first performed for causing the OSC material to store oxygen. Specifically, 1 g of the OSC material was put in a sample tube, and with a pure oxygen gas caused to pass through the sample tube at a flow rate of 50 mL/min, the OSC material was heated from room temperature to 600°C over 30 minutes at a constant temperature increasing rate, retained at the temperature for 15 minutes, and naturally cooled to 80°C. Subsequently, the supply of the pure oxygen gas to the sample tube was stopped, and with the temperature retained at 80°C, a N₂ gas was caused to pass through the sample tube at a flow rate of 50 mL/min for 10 minutes.

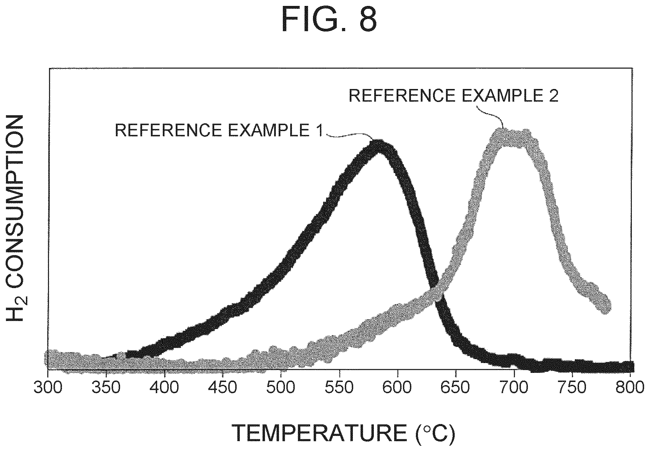

Subsequently, H₂ consumption of the OSC material caused during the temperature increasing process was measured. Specifically, with a gas mixture containing 5% by volume of H₂ gas and 95% by volume of N₂ gas caused to flow through the sample tube at a flow rate of 50 mL/min, H₂ consumption in heating the OSC material from 80°C to 800°C at a temperature increasing rate of 10°C/min was quantitatively measured. For the quantitative measurement of the H₂ consumption, a thermal conductivity detector (TCD) was used, and a desiccant was disposed at a previous stage of the TCD for trapping water generated during analysis. FIG. 8 illustrates H₂-TPR spectra (TCD signals) of the OSC materials obtained in Reference Examples 1 and 2.

As illustrated in FIG. 8, in the OSC material of Reference Example 1, the H₂ consumption started around 350°C in the temperature increasing process, continuously increased up to around 580°C corresponding to a peak of the H₂ consumption, and then decreased. Since the OSC material of Reference Example 1 had not been subjected to the endurance test, the oxygen storage capacity was retained, and a peak of the H₂ consumption was in a range of 500°C or more and 650°C or less. On the other hand, in the OSC material of Reference Example 2, the H₂ consumption started around 500°C in the temperature increasing process, continuously increased up to around 700°C corresponding to a peak of the H₂ consumption, and then decreased. Since the OSC material of Reference Example 2 had been exposed to a high temperature during the endurance test, the composite oxide of Ce-Zr-additive was probably deteriorated in the crystal structure, and hence the oxygen storage capacity was deteriorated.

The embodiments of the exhaust gas control apparatus, the exhaust gas control system and the method for producing an exhaust gas control apparatus of the present invention have been described so far, and it is noted that the invention is not limited to these embodiments but can be variously changed and modified in design.

## Claims

1. An exhaust gas control apparatus, comprising:
a honeycomb substrate (10) having a porous partition wall (14) demarcating a plurality of cells extending from an inflow side end surface to an outflow side end surface, the plurality of cells including an inflow cell and an outflow cell adjacent to each other with the partition wall (14) sandwiched between the inflow cell and the outflow cell;
a first sealing part (20) provided at an outflow side end (16Ab) of the inflow cell, and a second sealing part (20) provided at an inflow side end (16Ba) of the outflow cell; and
a catalyst layer (30) provided on the partition wall,
wherein the inflow cell is opened at an inflow side end (16Aa),
the inflow cell is sealed with the first sealing part (20) at the outflow side end (16Ab),
the outflow cell is sealed with the second sealing part (20) at the inflow side end (16Ba),
the outflow cell is opened at an outflow side end (16Bb),
at least one of the first sealing part (20) and the second sealing part (20) is an OSC material-containing sealing part containing an OSC material and a sealant, and
a concentration of the OSC material in the OSC material-containing sealing part is uniform in an extending direction.

2. The exhaust gas control apparatus according to claim 1, wherein the OSC material has a peak of H₂ consumption, in the H₂ consumption obtained by heating the OSC material at a temperature increasing rate of 10°C/min in a gas mixture atmosphere containing 5% by volume of H₂ gas and 95% by volume of N₂ gas, in a range of 500°C or more and 650°C or less.

3. The exhaust gas control apparatus according to claim 1 or 2, wherein the second sealing part (20) is the OSC material-containing sealing part.

4. An exhaust gas control system comprising:
an upstream control apparatus (130a) and a downstream control apparatus (130b) disposed on an upstream side and a downstream side, respectively, in an exhaust gas passage,
wherein the upstream control apparatus (130a) is a three-way catalyst apparatus, and
the downstream control apparatus (130b) is the exhaust gas control apparatus according to any one of claims 1 to 3.

5. A method for producing an exhaust gas control apparatus, including: a honeycomb substrate (10) having a porous partition wall (14) demarcating a plurality of cells extending from an inflow side end surface to an outflow side end surface, the plurality of cells including an inflow cell and an outflow cell adjacent to each other with the partition wall (14) sandwiched between the inflow cell and the outflow cell; a first sealing part (20) provided at an outflow side end (16Ab) of the inflow cell, and a second sealing part (20) provided at an inflow side end (16Ba) of the outflow cell; and a catalyst layer (30) provided on the partition wall (14), the inflow cell being opened at an inflow side end (16Aa), the inflow cell being sealed with the first sealing part (20) at the outflow side end (16Ab), the outflow cell being sealed with the second sealing part (20) at the inflow side end (16Ba), the outflow cell being opened at an outflow side end (16Bb), the method comprising:
a slurry preparing step of preparing an OSC material-containing slurry by mixing an OSC material, a sealant and a solvent;
a slurry filling step of filling at least one of the outflow side end (16Ab) of the inflow cell and the inflow side end (16Ba) of the outflow cell of the honeycomb substrate (10) with the OSC material-containing slurry; and
a burning step of burning the honeycomb substrate (10) filled with the OSC material-containing slurry to form, in at least one of the outflow side end (16Ab) of the inflow cell and the inflow side end (16Ba) of the outflow cell, an OSC material-containing sealing part containing the OSC material as at least one of the first sealing part (20) and the second sealing part (20).

6. The method for producing an exhaust gas control apparatus according to claim 5, wherein the OSC material has a peak of H₂ consumption, in the H₂ consumption obtained by heating the OSC material at a temperature increasing rate of 10°C/min in a gas mixture atmosphere containing 5% by volume of H₂ gas and 95% by volume of N₂ gas, in a range of 500°C or more and 650°C or less.

7. The method for producing an exhaust gas control apparatus according to claim 5 or 6, wherein the honeycomb substrate (10) filled with the OSC material-containing slurry is burned at a temperature in a range of 500°C or more and 800°C or less for 0.5 hours or more and 2 hours or less in the burning step.

8. The method for producing an exhaust gas control apparatus according to any one of claims 5 to 7,
wherein the inflow side end (16Ba) of the outflow cell is filled with the OSC material-containing slurry in the slurry filling step, and
the OSC material-containing sealing part is formed as the second sealing part (20) in the inflow side end (16Ba) of the outflow cell in the burning step.
